# EUROPÄISCHE PATENTSCHRIFT

(11) **EP 1 536 722 B1**
(45) Veröffentlichungstag und Bekanntmachung des Hinweises auf die Patenterteilung: **01.08.2007**
(21) Anmeldenummer: 03750537.7
(22) Anmeldetag: 12.09.2003
(51) Int. Cl.: A47J 27/21, A47J 31/057, A47J 31/10

(54) **VORRICHTUNG ZUR ZUBEREITUNG VON HEISSGETRÄNKEN**
DEVICE FOR PREPARING HOT BEVERAGES
DISPOSITIF DE PREPARATION DE BOISSONS CHAUDES

(30) Priorität: 13.09.2002 DE 10242634
(43) Veröffentlichungstag der Anmeldung: 08.06.2005
(73) Patentinhaber: Efbe Elektrogeräte GmbH, 07422 Bad Blankenburg (DE)
(72) Erfinder: HEINZE, Bernd, 07426 Königsee (DE)
(74) Vertreter: Reitstötter - Kinzebach
(86) Internationale Anmeldenummer: PCT/EP2003/010169
(87) Internationale Veröffentlichungsnummer: WO 2004/026088

(56) Entgegenhaltungen:
- WO-A-98/58577
- DE-A- 19 857 165

## Beschreibung

Vorliegende Erfindung betrifft eine Vorrichtung zur Zubereitung von Heißgetränken nach dem Oberbegriff des vorliegenden Patentanspruchs 1.

Vorrichtungen zur Zubereitung von Heißgetränken, insbesondere elektrisch betriebene Vorrichtungen, sind in unterschiedlichsten Formen bekannt, beispielsweise als Kaffee- oder Espressomaschinen, als Teeperkulatoren oder auch als einfache Wasserkocher, mit denen Wasser lediglich erhitzt und anschließend zum Aufbrühen von Getränken, Suppen und ähnlichem beispielsweise in vorbereitete Gefäße gegossen wird. In modernen Haushalten finden sich heute zahlreiche elektrische Geräte zur Zubereitung von Speisen und Getränken, die häufig täglich zum Einsatz kommen und daher meist ständig auf den Arbeitsplatten und -Tischen in der Küche bereitstehen. Beispielhaft sind neben den oben bereits erwähnten Geräten Toaster, Eierkocher, Saftpressen oder Mixer zu nennen. Angesichts des Platzbedarfes dieser häufig benötigten elektrischen Geräte und der Notwendigkeit, für jedes Einzelgerät eine separate Verbindung zum Stromnetz bereitzustellen, ist man bestrebt, möglichst viele Küchengeräte in praktikabler Weise zu sog. Kombigeräten zusammenzufassen.

So wird z.B. in dem deutschen Gebrauchsmuster DE 297 04 023 U1 eine Kaffeemaschine beschrieben, deren Grundplatte elektrisch und mechanisch mit geeigneten Grundplatten für weitere Haushaltsgeräte verbunden werden kann. So ist in diesem Dokument beispielsweise Kombigerät aus einer Kaffeemaschine und einem Wasserkocher beschrieben. Bei beiden Geräten handelt es sich aber im wesentlichen um herkömmliche Einzelgeräte, die lediglich durch die elektrische Verbindung ihrer Grundplatten auf eine gemeinsame Stromversorgung zurückgreifen können, so dass für den Betrieb beider Geräte lediglich ein Netzstecker benötigt wird. Allerdings ist bei dem bekannten Gerät zusätzlich zum Wasserkocher ein separater Wasservorratsbehälter für die Kaffeemaschine vorgesehen, so dass der Platzbedarf gegenüber herkömmlichen Einzelgeräten nicht nennenswert reduziert wird.

In der deutschen Patentanmeldung DE 198 57 165 A1 wird eine Vorrichtung zur Zubereitung von Heißgetränken gemäß Oberbegriff des vorliegenden Anspruchs 1 beschrieben. Die dort beschriebene Vorrichtung besteht aus einer Kombination einer Kaffeemaschine mit einem Wasserkocher, wobei der Wasserkocher gleichzeitig als Wasservorratsbehälter für die Kaffeemaschine dient. Als nachteilig erweist sich bei diesem Kombigerät, dass der gesamte Inhalt des Wasserkochers auch dann erhitzt wird, wenn das Gerät lediglich als Kaffeemaschine benutzt wird. Dies stellt nicht nur eine erhebliche Gefahrenquelle dar, weil der abnehmbare, auch bei der Kaffeezubereitung stets mit heißem Wasser gefüllte Wasserkocher ungewollt umgestoßen werden kann, sondern ist insbesondere dann, wenn der Wasservorratsbehälter praktisch voll ist, aber nur wenige Tassen Kaffe zubereitet werden sollen, mit einem unnötigen Energieverbrauch verbunden.

Aus DE 299 20 890 U1 ist eine Kaffeemaschine mit einem abnehmbaren Wasserbehälter bekannt, der im Inneren eine Heizschlange aufweist, wobei über einen an einem Gerätesockel vorgesehenen Schalter zwischen Kaffeebetrieb und Heißwasserzubereitung umgeschaltet werden kann. Über den Schalter müssen dabei sowohl die elektrischen Kontakte als auch ein Verbindungsventil zwischen Wasserbehälter und Kaffeefilter betätigt werden.

Der vorliegenden Erfindung liegt daher das technische Problem zugrunde, eine Vorrichtung zur Zubereitung von Heißgetränken bereitzustellen, die wahlweise zum Aufbrühen von Kaffee oder Tee oder zum Erhitzen von Wasser verwendet werden kann, wobei diese beiden Betriebsarten vom Benutzer leicht und intuitiv separat einstellbar sein sollen. Insbesondere soll der Platzbedarf der erfindungsgemäßen Vorrichtung möglichst gering sein.

Gelöst wird dieses technische Problem durch die Vorrichtung zur Zubereitung von Heißgetränken mit den Merkmalen des vorliegenden Anspruchs 1. Der Erfindung liegt der Gedanke zugrunde, den Betrieb der Vorrichtung zum Aufbrühen von Kaffee oder Tee einerseits und zum Erhitzen von Wasser andererseits lediglich durch eine unterschiedliche Anordnung des gleichzeitig als Wasserkocher und als Vorratsbehälter für die Kaffeemaschine dienenden Wasserbehälters auf seiner Grundplatte umzustellen.

Gegenstand der Erfindung ist demnach eine Vorrichtung zur Zubereitung von Heißgetränken mit einem auf einer ersten Grundplatte angeordnetem, von der Grundplatte abnehmbaren Wasserbehälter, der eine erste Heizeinrichtung zum Erhitzen des in dem Wasserbehälter befindlichen Wassers aufweist, einer Kaffee- oder Teepulver aufnehmenden Filtereinheit, Mitteln zum Überführen von aus dem Wasserbehälter stammendem Wasser in die Filtereinheit, wobei die Mittel zum Überführen des Wassers eine zweite Heizeinrichtung zum Erhitzen des zu überführenden Wassers aufweisen, und mit einem der Filtereinheit nachgeordneten Aufnahmegefäß, wobei die erfindungsgemäße Vorrichtung dadurch gekennzeichnet ist, dass der Wasserbehälter wahlweise in einer ersten Stellung, in welcher der Wasserbehälter als Vorratsbehälter für das in die Filtereinheit zu überführende Wasser dient, oder einer zweiten Stellung, in welcher der Wasserbehälter als Wasserkocher dient, positionierbar ist.

Durch die unterschiedliche Stellung des Wasserbehälters erkennt der Benutzer auf den ersten Blick, ohne auf Kontrollleuchten oder, im Gegensatz zu der in dem deutschen Gebrauchsmuster DE 299 20 890 U1 beschriebenen Kaffeemaschine auf bestimmte Schalterstellungen achten zu müssen, in welcher Betriebsart sich die erfindungsgemäße Vorrichtung zu jedem Zeitpunkt befindet. Nach dem Nachfüllen von Wasser in den Wasserbehälter kann der Benutzer also schon durch Aufsetzen des Wasserbehälters auf die Grundplatte in der jeweiligen Position die Betriebsart vorgeben, ohne weitere Schalter oder Einstellknöpfe betätigen zu müssen.

Besonders bevorzugt ist der Wasserbehälter in der ersten Stellung gegenüber der zweiten Stellung winkelversetzt. Der Benutzer kann also durch einfaches Drehen des Wasserbehälters bezüglich der Grundplatte die jeweilige Benutzungsart vorgeben. Besonders bevorzugt ist der Wasserbehälter in der zweiten Stellung im wesentlichen um 90° zur ersten Stellung gedreht. Beispielsweise kann man die erfindungsgemäße Vorrichtung so ausbilden, dass bei der typischen Anordnung auf der Küchenarbeitsplatte der Wasserbehälter in der Betriebsart als Wasserkocher, d.h. in der zweiten Stellung, mit seinem Griff zum Benutzer orientiert ist, während der Griff in der Betriebsart als Wasservorratsbehälter für die Kaffee- oder Teezubereitung, also in der ersten Stellung, demgegenüber um 90° vom Benutzer abgewandt ist. Somit lassen sich die verschiedenen Benutzungsarten intuitiv erfassen.

Wenn im vorliegenden Zusammenhang von zwei unterschiedlichen Stellungen des Wasserbehälters die Rede ist, so ist dies im Sinne von "mindestens" zwei unterschiedlichen Stellungen zu verstehen, denn man kann beispielsweise auch vorsehen, dass ausgehend von der ersten Stellung, in welcher die Vorrichtung als Kaffeemaschine arbeitet, die Betriebsart als Wasserkocher sowohl bei einer Drehung des Wasserbehälters um 90° gegen den Uhrzeigersinn als auch bei einer Drehung um 90° im Uhrzeigersinn erreicht wird, so dass es in diesem Beispiel zusätzlich zu der Kaffee- oder Teezubereitungsstellung zwei weitere Stellungen gäbe, in denen die Vorrichtung als Wasserkocher arbeitet. Abgesehen von gegeneinander verdrehten Stellungen können erfindungsgemäß auch andere Positionsveränderungen des Wasserbehälters, beispielsweise ein seitliches Versetzen auf der Grundplatte realisiert werden. Eine Drehung des Wasserbehälters zwischen den beiden Betriebsstellungen ist aber aufgrund des geringen Platzbedarfs der resultierenden Vorrichtung besonders bevorzugt.

Die detaillierte Technik von Kaffeemaschinen und Wasserkochern ist dem Fachmann bekannt und muss hier nicht wiederholt werden. Die erfindungsgemäße Vorrichtung nutzt die bekannt Technik und unterscheidet sich von einer herkömmlichen Kaffeemaschine lediglich dadurch, dass der Wasservorratsbehälter der Kaffeemaschine als abnehmbarer schnurloser Wasserkocher ausgebildet ist und mit allen von Wasserkochern her bekannten Merkmalen, wie Dampfabschaltung, sowie insbesondere verschiedensten Überhitzungsschutzeinrichtungen versehen sein.

In der Betriebsart als Wasservorratsbehälter zum Aufbrühen von Kaffee-oder Tee muss daher zunächst eine kommunizierende Verbindung zwischen dem Inneren des Wasserbehälters und den Mitteln zum Überführen von Wasser aus dem Wasserbehälter in die Filtereinheit gewährleistet werden. Dazu weist der Wasserbehälter vorzugsweise im Bodenbereich eine durch eine selbst schließende Ventileinrichtung verschließbare Auslassöffnung auf. Die Ventileinrichtung gewährleistet, dass beim Abheben des Wasserbehälters von der Grundplatte kein Wasser aus dem Behälter durch die Auslassöffnung austreten kann. Vorzugsweise sind die Grundplatte und die Unterseite des Wasserbehälters so ausgestaltet, dass die selbstschließende Ventileinrichtung nur dann geöffnet wird, wenn man den Wasserbehälter in der ersten Position anordnet. Dazu münden die Mittel zum Überführen des Wassers vorzugsweise in einen an der Oberseite der ersten Grundplatte vorgesehenen Einlassstutzen, der die Ventileinrichtung öffnet, wenn der Wasserbehälter in der ersten Position angeordnet ist. Dazu kann der Einlassstutzen beispielsweise einen Dorn aufweisen, der in die im Bodenbereich des Wasserbehälters angeordnete Auslassöffnung eingreift und die selbstschließende Ventileinrichtung, die beispielsweise als federbelastetes Rückschlagventil ausgebildet sein kann, betätigt.

Vorzugsweise weisen auch die Mittel zum Überführen des Wassers ein dem Einlassstutzen nachgeschaltetes, also beispielsweise zwischen dem Einlassstutzen und der zweiten Heizeinrichtung zum Erhitzen des zu überführenden Wassers angeordnetes Rückschlagventil auf. Dieses Rückschlagventil gewährleistet, dass beim Abheben des Wasserbehälters von der Grundplatte kein bereits aus dem Wasserbehälter entnommenes und möglicherweise bereits in der zweiten Heizeinrichtung erhitztes Wasser zurücklaufen und aus dem Einlassstutzen austreten kann.

Die Mittel zum Überführen des Wassers umfassen vorzugsweise Leitungen und/oder Schläuche, welche den Einlassstutzen mit der zweiten Heizeinrichtung verbinden, die, wie von Kaffeemaschinen her bekannt, vorteilhaft als Durchlauferhitzer ausgebildet sein kann. An die zweite Heizeinrichtung schließen sich weitere Leitungsverbindungen an, beispielsweise ein Steigrohr, die schließlich in an sich bekannter Weise in geeigneten, über der Filtereinheit angeordneten Tropfeinrichtungen enden. Nachdem das Wasser die Filtereinheit, in die zuvor Kaffee- oder Teepulver gefüllt wurde, passiert hat, wird der resultierende Sud von dem Aufnahmegefäß, also beispielsweise einer Kaffee- oder Teekanne aufgenommen.

Der Wasserbehälter der erfindungsgemäßen Vorrichtung ist vorzugsweise als schnurloser Wasserkocher ausgebildet. Dazu sind in der ersten Grundplatte elektrische Versorgungsmittel vorgesehen, die in der zweiten Stellung des Wasserbehälters über einen lösbaren Kontakt mit der vorzugsweise im Bodenbereich des Wasserbehälters angeordneten ersten Heizeinrichtung in elektrischem Kontakt stehen. Vorzugsweise umfassen die lösbaren Kontaktmittel einen an der Oberseite der ersten Grundplatte angeordneten 360° Stecker, der mit einer komplementären, an der Unterseite des Wasserbehälters angeordneten Buchse zusammenwirkt. Derartige Stecker sind bekannt und werden beispielsweise in der Internationalen Patentanmeldung WO 95/08204 der Firma Strix beschrieben. Der 360° Stecker erlaubt ein besonders einfaches Drehen des Wasserbehälters von der ersten in die zweite Stellung und umgekehrt, ohne dass der Wasserbehälter vollständig von der Grundplatte abgehoben werden muss. Vorzugsweise ist der elektrische Kontakt in der ersten Stellung des Wasserbehälters, also in der Stellung, in welcher die Vorrichtung als Kaffeemaschine arbeitet, unterbrochen. Bei Verwendung eines 360° Steckers wird man vorzugsweise dafür sorgen, dass der Stecker und die an der Unterseite des Wasserbehälters angeordnete komplementäre Buchse in der ersten Stellung so weit voneinander beabstandet sind, dass der elektrische Kontakt zwischen Stecker und Buchse unterbrochen ist. Vorzugsweise wird man dabei die Oberseite der ersten Grundplatte und/oder die Unterseite des Wasserbehälters so profilieren, dass der elektrische Kontakt beim Drehen des Wasserbehälters von der zweiten in die ersten Position unterbrochen wird bzw. beim Aufsetzen des Wasserbehälters in der ersten Position gar nicht erst hergestellt wird. Dazu kann man beispielsweise an der Unterseite des Wasserbehälters Noppen vorsehen, die in der zweiten Position in geeignet angeordnete, komplementäre Vertiefungen auf der Oberseite der Grundplatte eingreifen können, so dass der elektrische Kontakt zwischen Stecker und Buchse gewährleistet ist. In jeder anderen Stellung, insbesondere in der ersten Stellung, liegen die Noppen auf der flachen Oberseite der Grundplatte auf und sorgen so für den nötigen Abstand zwischen Stecker und Buchse, so dass der elektrische Kontakt unterbrochen ist. Durch geeignet positionierte Kontakte kann man entsprechend auch dafür sorgen, dass ein Einschalten der Kaffeemaschine nicht möglich ist, wenn sich der Wasserbehälter in der zweiten Position befindet, also als Wasserkocher arbeitet.

Der Aufnahmebehälter, also beispielsweise eine Kaffee- oder Teekanne, kann vom Benutzer frei unter der Filtereinheit positioniert werden. Vorzugsweise ist jedoch eine zweite Grundplatte für den Aufnahmebehälter vorgesehen, die gewährleistet, dass der Aufnahmebehälter möglichst zentral unter einer Auslassöffnung der Filtereinheit positioniert werden kann. Die zweite Grundplatte kann beispielsweise eine elektrisch beheizte Wärmeplatte umfassen, welche das aufgebrühte Getränk bis zur Verwendung warm hält. Vorzugsweise sind die erste und zweite Grundplatte miteinander zu einem gemeinsamen Sockel der erfindungsgemäßen Vorrichtung verbunden, wobei der Sockel beispielsweise als ein einstückiges Kunststoffformteil ausgestaltet sein kann, in welches an sich bekannte Bedien- und Anzeigeelemente integriert sein können.

Gemäß einer weiteren Ausführungsform kann der Wasserbehälter aber auch über der Filtereinheit angeordnet sein, was den Platzbedarf der erfindungsgemäßen Vorrichtung besonders verringert. Die erste Grundplatte ist dann zwischen Filtereinheit und Wasserbehälter angeordnet, so dass die Mittel zum Überführen von aus dem Wasserbehälter stammendem Wasser in die Filtereinheit besonders einfach ausgebildet sein können, da beispielsweise ein Steigrohr entfallen kann.

Die Filtereinheit und, bei der zweiten Ausführungsform der erfindungsgemäßen Vorrichtung auch die erste Grundplatte, können an zumindest einem vertikal verlaufenden Profilrohr, beispielsweise an einem Metallrohr, befestigt sein. Dies erlaubt bei der Herstellung eine besonders einfache Anpassung an unterschiedliche Kannengrößen, da lediglich die Länge des Profilrohrs entsprechend angepasst werden muss, während die übrigen Bauelemente unverändert bleiben. Gemäß einer weiteren Ausführungsform kann die Filtereinheit lösbar an dem Profilrohr befestigt sein, so dass auch der Benutzer in gewissem Umfang eine Anpassung der Höhe der Vorrichtung vornehmen kann, wenn beispielsweise Kaffee statt in eine flache Kaffeekanne in eine höhere Thermoskanne abgefüllt werden soll. Dazu muss allerdings gewährleistet sein, dass auch die Rohr- oder Schlauchverbindungen der Mittel zum Überführen des Wassers entsprechend anpassungsfähig ausgestattet sind.

Gemäß einer bevorzugten Ausführungsform der erfindungsgemäßen Vorrichtung kann bei abgenommenem Wasserbehälter ein weiteres elektrisch betriebenes schnurloses Küchengerät auf der Grundplatte angeordnet werden kann. Vorzugsweise handelt es sich bei diesem zusätzlichen Gerät um einen schnurlosen Toaster oder einen schnurlosen Eierkocher. Dabei können die Bodenplatte des zusätzlichen schnurlosen Geräts oder auch die Gehäuse die jeweiligen elektrischen Verbindungen von Grundplatte und Gerät so ausgebildet sein, dass das Gerät nur in einer solchen Position auf der Grundplatte positionierbar ist, in der die elektrischen Versorgungsmittel der Grundplatte mit komplementären Kontaktmitteln, die in der Bodenplatte vorgesehen sind, in elektrischem Kontakt stehen. Es kann aber auch eine beliebige Orientierung der zusätzlichen Geräte ermöglicht werden. Die elektrischen Kontaktmittel der Bodenplatte der zusätzlichen Geräte können, wie bereits im Zusammenhang mit dem Wasserkocher beschrieben, eine Buchse für einen 360°-Stecker aufweisen.

Im folgenden wird die erfindungsgemäße Vorrichtung anhand von in den beigefügten Zeichnungen dargestellten Ausführungsbeispielen näher beschrieben.

In den Zeichnungen zeigen
- Figur 1: eine schematische Darstellung einer ersten Ausführungsform der erfindungsgemäßen Vorrichtung;
- Figur 2: eine schematische Darstellung einer zweiten Ausführungsform der er findungsgemäßen Vorrichtung;
- Figur 3: eine Aufsicht auf die erste Ausführungsform der erfindungsgemäßen Vorrichtung, wobei sich der Wasserbehälter in der ersten Stellung befindet;
- Figur 4: einen Längsschnitt entlang der Linie IV - IV der Vorrichtung der Figur 3;
- Figur 5: eine Detailansicht aus der Darstellung der Figur 4;
- Figur 6: eine Aufsicht auf die erste Ausführungsform der erfindungsgemäßen Vorrichtung, wobei sich der Wasserbehälter in der zweiten Stellung befindet;
- Figur 7: einen Längsschnitt entlang der Linie VII - VII der Vorrichtung der Figur 6;
- Figur 8: eine Detailansicht aus der Darstellung der Figur 7;
- Figur 9: eine Aufsicht auf den Sockel der Vorrichtung der Figur 1; und
- Figur 10: eine schematische, perspektivische Darstellung des Sockels der Figur 9.

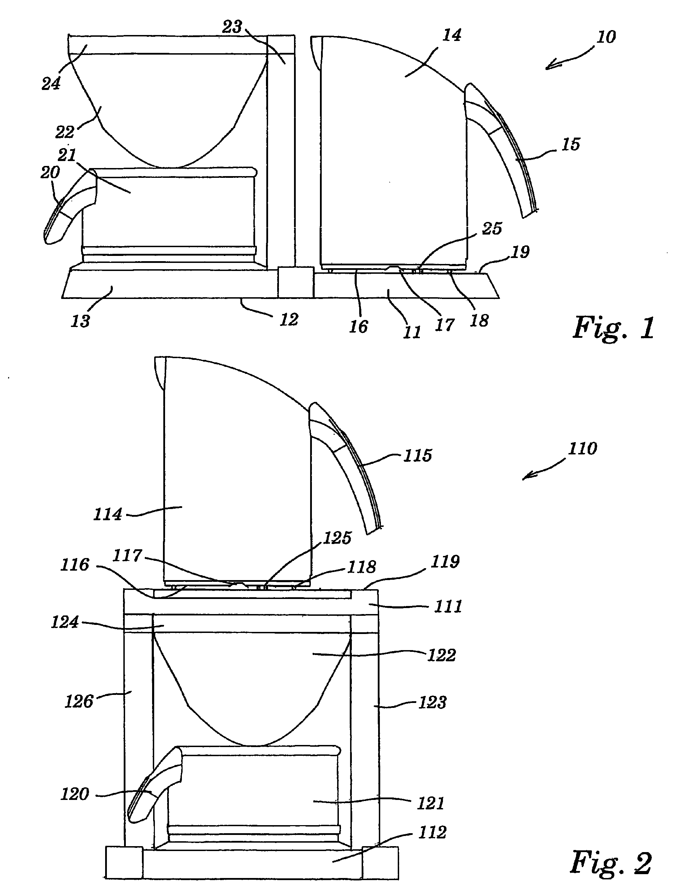

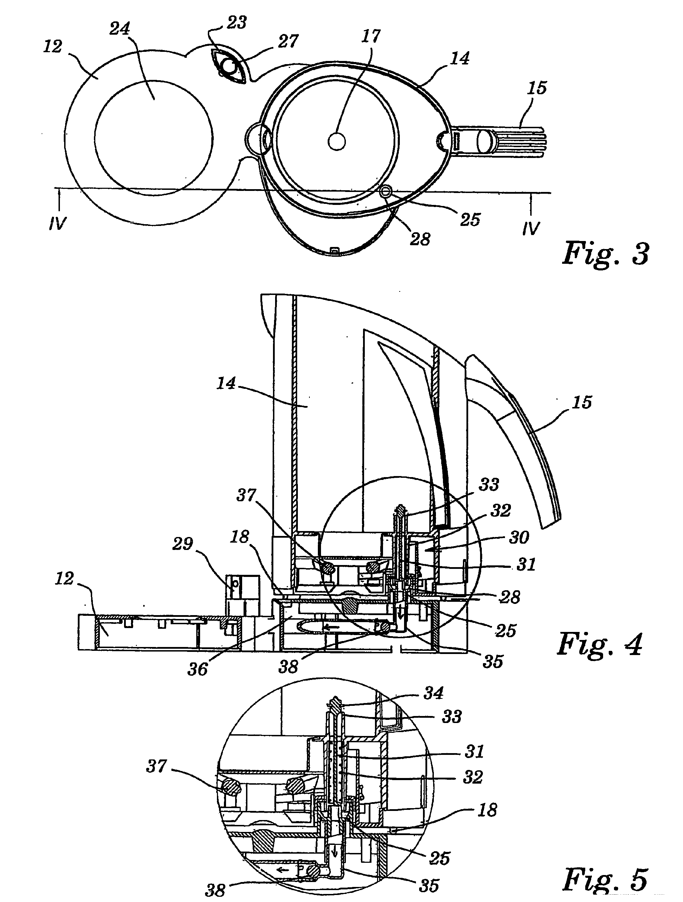

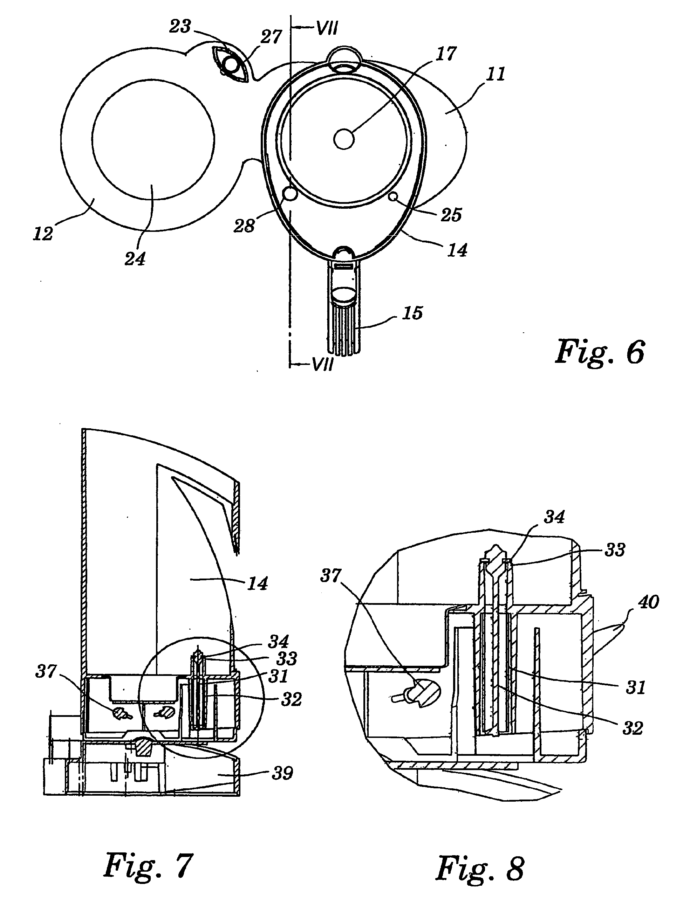

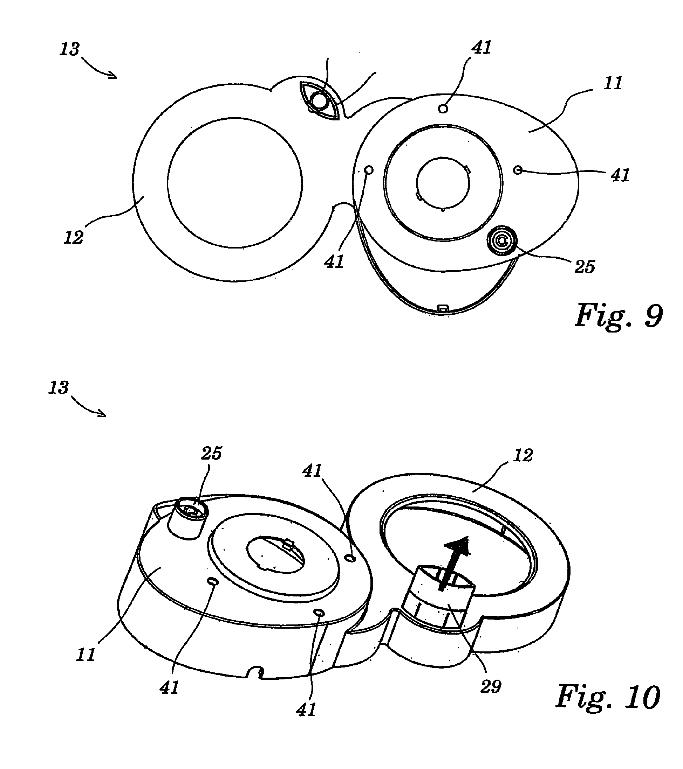

Bezugnehmend auf Figur 1 erkennt man eine erste Ausführungsform der erfindungsgemäßen Vorrichtung zur Zubereitung von Heißgetränken, die insgesamt mit der Bezugsziffer 10 bezeichnet ist. Die Vorrichtung 10 umfasst einen aus einer ersten Grundplatte 11 und einer zweiten Grundplatte 12 bestehenden Gerätesockel 13, welcher (in der schematischen Darstellung der Figur 1 nicht dargestellte) Bedien- und Anzeigeelemente aufweist und die Geräteelektronik, sowie die elektrischen Versorgungseinrichtungen, also insbesondere ein Netzkabel und gegebenenfalls Transformatoren umfasst. Der Sockel 13 kann modulartig aus den beiden Grundplatten zusammengesetzt oder beispielsweise als einstückiges Kunststoffformteil ausgebildet sein. Auf der ersten Grundplatte ist ein abnehmbarer Wasserbehälter 14 mit einem Griff 15 angeordnet, der als schnurloser Wasserkocher ausgebildet ist. Der Wasserbehälter 14 kann in zumindest zwei unterschiedlichen Stellungen auf der ersten Grundplatte 11 angeordnet werden, wobei sich der Wasserbehälter in der Darstellung der Figur 1 in der ersten Stellung befindet, in welcher er als Wasservorratsbehälter für die Kaffeemaschine dient. Für den Betrieb als Wasserkocher weist der Wasserbehälter 14 auf seiner Unterseite 16 einen lösbaren Kontakt 17, mit der eine im Bodenbereich des Behälters 14 angeordnete, in der Darstellung der Figur 1 nicht erkennbare, erste Heizeinrichtung mit den elektrischen Versorgungseinrichtungen der Grundplatte 11 verbunden werden kann. In der dargestellte ersten Stellung ist der lösbare Kontakt 17 unterbrochen. Dazu weist der Wasserbehälter 14 auf seiner Unterseite 16 Noppen 18 auf, die in der ersten Stellung auf der Oberseite 19 der Grundplatte 11 aufliegen und die den Wasserbehälter soweit anheben, dass der elektrische Kontakt 17 unterbrochen ist. In der zweiten Stellung des Wasserbehälters 14 (vgl. Figur 6) greifen die Noppen 18 in Vertiefungen ein, die auf der Oberseite 19 der Grundplatte 11 ausgespart sind, so dass sich der Behälter 14 etwas absenkt und den Kontakt herstellt (vgl. Figur 10). Auf der zweiten Grundplatte 12 ist eine mit einem Griff 20 versehene Kaffeekanne 21 als Aufnahmegefäß angeordnet. Über der Kaffeekanne 16 ist eine Filtereinheit 22 angeordnet, Kaffee- oder Teepulver aufnehmen kann und schwenkbar an einem Profilrohr 23 aus Metall befestigt ist. In dem Profilrohr 23 verläuft ein (hier nicht sichtbares) Steigrohr für das von einer im Sockel 13 angeordneten zweiten Heizeinrichtung, beispielsweise einem Durchlauferhitzer, erhitzte Wasser, das dann in eine über der Filtereinheit 22 vorgesehenen Tropfeinrichtung 24 geführt wird. Das zu erhitzende Wasser wird dem Wasserbehälter 14 über eine an der Unterseite 16 des Behälters vorgesehen Öffnung mittels eines von der Oberseite 19 der Grundplatte 11 ausgehenden Einlassstutzens 25 entnommen, wie unten unter Bezugnahme auf die Darstellung der Figuren 4 und 5 detaillierter erläutert wird.

In Figur 2 ist eine besonders platzsparende zweite Ausführungsform der erfindungsgemäßen Vorrichtung dargestellt, die insgesamt mit der Bezugsziffer 110 bezeichnet ist. Bauelemente, die gleiche oder entsprechende Funktionen wie die Bauelemente der Ausführungsform der Figur 1 erfüllen, sind mit denselben, aber um 100 erhöhten Bezugsziffern bezeichnet und werden hier nicht näher erläutert. Bei der Ausführungsform der Figur 2 sind die erste Grundplatte 111 und der abnehmbare Wasserbehälter 114 über der Kaffeekanne 121 und der Filtereinheit 122 angeordnet. Auch bei dieser zweiten Ausführungsform kann der Wasserbehälter 114 in zumindest zwei Stellungen auf der Grundplatte 111 angeordnet werden und dient wahlweise als Wasserkocher oder als Wasservorratsbehälter für die Kaffee- oder Teezubereitung, wobei in der Darstellung der Figur 2, wie auch im Fall der Figur 1, die erste Stellung des Wasserbehälters gezeigt ist. Im dargestellten Beispiel ist aus Stabilitätsgründen neben dem Metallprofilrohr 123 ein weiteres Profilrohr 126 aus Metall vorgesehen, die sich beide von der zweiten Grundplatte 112 ausgehend nach oben erstrecken und die erste Grundplatte 111 tragen.

Im Folgenden wird die Erfindung der Einfachheit halber lediglich unter Bezugnahme auf die in Figur 1 dargestellte erste Ausführungsform erläutert, da sich die Funktionsweise der in Figur 2 dargestellten zweiten Ausführungsform ohne weiteres aus diesen Erläuterungen ergibt.

In Figur 3 ist eine Aufsicht auf die in Figur 1 dargestellte Anordnung der ersten Ausführungsform der erfindungsgemäßen Vorrichtung gezeigt, wobei sich der Wasserbehälter 14 in der ersten Stellung befindet, in der er als Wasservorratsbehälter für die Kaffee- oder Teezubereitung dient. Schematisch sind das Profilrohr 23 mit dem im Inneren angeordneten Steigrohr 27 dargestellt. Ferner erkennt man die Lage des lösbaren Kontaktes 17 und einer auf der Unterseite des Wasserbehälters 14 vorgesehenen Austrittsöffnung 28, die in dieser Position mit der Lage des auf der Grundplatte 11 vorgesehenen Einlassstutzens 25 übereinstimmt.

In Figur 4 ist ein schematischer Querschnitt entlang der Linie IV - IV der Figur 3 gezeigt, wobei die Kaffeekanne 21, sowie die Filtereinheit 22 mit Verteiler 24 und das metallische Profilrohr 23, mit Ausnahme eines Montagestutzens 29, der Übersichtlichkeit halber weggelassen wurden. In Figur 5 ist der mit einem Kreis bezeichnete Ausschnitt der Figur 4 detaillierter dargestellt. Man erkennt, dass auf der Unterseite 16 des Wasserbehälters 14 die Öffnung 28 ausgespart ist, in die eine selbstschlie-ßende Ventileinrichtung 30 eingepasst ist. Die Ventileinrichtung 30 umfasst einen beweglichen Ventilstössel 31, der im Ruhezustand (vgl. Figur 8) durch eine Druckfeder 32 gegen einen Ventilsitz 33 gedrückt wird. Zur besseren Abdichtung weist der Ventilstössel 31 im Auflagebereich auf den Sitz 33 eine umlaufende Silikondichtung 34 auf. Bei der in den Figuren 4 und 5 dargestellten ersten Position des Wasserbehälters 14 greift der auf der Oberseite 19 der ersten Grundplatte 11 vorgesehener Einlassstutzen 25 oder ein Dorn des Einlassstutzen in die Auslassöffnung 28 am Boden des Wasserbehälters 14 ein und schiebt den Stössel 31 gegen die Kraft der Druckfeder 32 nach oben, so dass am Ventilsitz 33 eine Öffnung freigegeben wird, durch welche Wasser aus dem Behälter 14 in den Einlassstutzen 25 und über eine Leitung 35 zu einem Durchlauferhitzer 36 fließen kann. Von dort steigt das erhitzte Wasser über das Steigrohr 27 im Inneren des Profilrohrs 23 in den über der Filtereinheit 22 angeordneten Verteiler 24 (vgl. Figur 1). Man erkennt in den Figuren 4 und 5 außerdem einen Schnitt durch ein als Heizspirale 37 ausgebildete Heizeinrichtung, die im Boden des Wasserbehälters 14 für dessen Betrieb als Wasserkocher vorgesehen ist. In der in den Figuren 4 und 5 dargestellten ersten Stellung des Wasserkochers steht die Heizspirale 32 mit ihren im Sockel 13 angeordneten elektrischen Versorgungseinrichtungen nicht in Kontakt und kann daher nicht aktiviert werden. Ferner erkennt man in Figur 5 deutlich, dass in der Leitung 35 in der Nähe des Einlassstutzens 25 ein Rückschlagventil 38 vorgesehen ist, welches verhindert, dass beim Abnehmen des Wasserbehälters 14 ggf. schon erhitztes Wasser von dem Durchlauferhitzer 36 zurück zum Einlassstutzen 25 fließen kann.

Figur 6 zeigt eine der Ansicht der Figur 3 entsprechende Aufsicht auf die Vorrichtungen der Figur 1, wobei sich der Wasserbehälter 14 nun in seiner zweiten Betriebsstellung befindet, die gegenüber der in Figur 3 dargestellten ersten Stellung um 90° im Uhrzeigersinn gedreht ist, wie insbesondere durch die Stellung des Griffs 15 deutlich wird. Die Austrittsöffnung 28 und der Einlassstutzen 25 liegen nicht mehr übereinander.

In Figur 7 ist ein Schnitt entlang der Linie VII - VII der Figur 6 dargestellt, während Figur 8 wiederum den in Figur 7 durch eine Kreis bezeichneten Bereich detaillierter darstellt. Man erkennt man, dass in der zweiten Stellung des Wasserbehälters 14 kein Einlassstutzen in die Auslassöffnung 28 des Wasserbehälters eingreift, so dass, wie insbesondere aus der Detailansicht der Figur 8 deutlich wird, der Stössel 31 durch die Druckfeder 32 fest gegen den Ventilsitz 33 gerückt wird, so dass die Auslassöffnung durch die Silikondichtung 34 zuverlässig abgedichtet wird. In dieser Stellung gewährleistet der lösbare elektrische Kontakt 17 eine elektrisch leitende Verbindung zwischen den im Sockel 13 vorgesehenen Stromversorgungsmitteln 39 und der im Bodenbereich des Behälters 14 angeordneten Heizspirale 37. Üblicherweise wird man an dem Wasserkocher 14 oder auch in der ersten Bodenplatte 11 einen Schalter 40 vorsehen, über den die Heizspirale 32 vom Benutzer eingeschaltet werden kann.

In den Figuren 9 und 10 ist der aus erster Grundplatte 11 und zweiter-Grundplatte 12 bestehende Sockel 13 nochmals in Aufsicht bzw. in perspektivischer Ansicht dargestellt. Man erkennt insbesondere die in dem ersten Sockel 11 vorgesehenen Vertiefungen 41, in welche die komplementäre, auf der Unterseite des Wasserbehälters 14 vorgesehene Noppen 18 eingreifen können, wenn sich der Wasserbehälter 14 in der in Fig. 6 dargestellten zweiten Stellung befindet, so dass der elektrische Kontakt zwischen der Heizspirale 37 und den Stromversorgungsmitteln 39 hergestellt werden kann.

## Patentansprüche

1. Vorrichtung zur Zubereitung von Heißgetränken mit einem auf einer ersten Grundplatte (11) angeordneten, von der Grundplatte abnehmbaren Wasserbehälter (14), der eine erste Heizeinrichtung (37) zum Erhitzen des in dem Wasserbehälter befindlichen Wassers aufweist, einer Kaffee- oder Teepulver aufnehmenden Filtereinheit (22), Mitteln (25,35) zum Überführen von aus dem Wasserbehälter (14) stammendem Wasser in die Filtereinheit (22), wobei die Mittel (25,35) zum Überführen des Wassers eine zweite Heizeinrichtung (36) zum Erhitzen des zu überführenden Wassers aufweisen, und einem der Filtereinheit (22) nachgeordneten Aufnahmegefäß (21),
**dadurch gekennzeichnet,**
**dass** der Wasserbehälter (14) wahlweise in einer ersten Stellung, in welcher der Wasserbehälter (14) als Vorratsbehälter für das in die Filtereinheit (22) zu überführende Wasser dient, oder einer zweiten Stellung, in welcher der Wasserbehälter (14) als Wasserkocher dient, positionierbar ist.

2. Vorrichtung gemäß Anspruch 1, **dadurch gekennzeichnet, dass** der Wasserbehälter (14) in der ersten Stellung gegenüber der zweiten Stellung winkelversetzt ist.

3. Vorrichtung gemäß Anspruch 2, **dadurch gekennzeichnet, dass** der Wasserbehälter (14) in der zweiten Stellung im wesentlichen um 90° zur ersten Stellung gedreht ist.

4. Vorrichtung gemäß einem der Ansprüche 1 bis 3, **dadurch gekennzeichnet, dass** der Wasserbehälter (14) im Bodenbereich (16) eine durch eine selbstschließende Ventileinrichtung (30) verschließbare Auslassöffnung (28) aufweist.

5. Vorrichtung gemäß Anspruch 4, **dadurch gekennzeichnet, dass** die Mittel (25,35) zum Überführen des Wassers in einen auf der Oberseite (19) der ersten Grundplatte (11) angeordneten Einlassstutzen (25) münden, der die Ventileinrichtung (30) öffnet, wenn der Wasserbehälter (14) in der ersten Position angeordnet ist.

6. Vorrichtung gemäß Anspruch 5, **dadurch gekennzeichnet, dass** die Mittel (25,35) zum Überführen des Wassers ein dem Einlassstutzen (35) nachgeschaltetes Rückschlagventil (38) umfassen.

7. Vorrichtung gemäß einem der Ansprüche 1 bis 5, **dadurch gekennzeichnet, dass** die erste Grundplatte (12) elektrische Versorgungsmittel (39) umfasst, die in der zweiten Stellung des Wasserbehälters (14) über lösbare Kontaktmittel (17) mit der ersten Heizeinrichtung (37) in elektrischem Kontakt stehen.

8. Vorrichtung gemäß Anspruch 7, **dadurch gekennzeichnet, dass** die lösbaren Kontaktmittel (17) einen an der Oberseite der ersten Grundplatte (11) angeordneten 360°-Stecker umfassen, der mit einer komplementären an der Unterseite des Wasserbehälters angeordneten Buchse zusammenwirkt.

9. Vorrichtung gemäß einem der Ansprüche 7 oder 8, **dadurch gekennzeichnet, dass** der elektrische Kontakt in der ersten Stellung des Wasserbehälters (14) unterbrochen ist.

10. Vorrichtung gemäß einem der Ansprüche 2 - 8 und Anspruch 9, **dadurch gekennzeichnet, dass** die Oberseite (19) der ersten Grundplatte (11) und die Unterseite (16) des Wasserbehälters (14) so profiliert sind, dass der elektrische Kontakt beim Drehen des Wasserbehälters (14) von der zweiten in die erste Position unterbrochen wird.

11. Vorrichtung gemäß einem der Ansprüche 1 bis 10, **dadurch gekennzeichnet, dass** eine zweite Grundplatte (12) für den Aufnahmebehälter (21) vorgesehen ist.

12. Vorrichtung gemäß Anspruch 11, **dadurch gekennzeichnet, dass**, die erste und zweite Grundplatte (11,12) miteinander zu einem gemeinsamen Sockel (13) verbunden sind.

13. Vorrichtung gemäß einem der Ansprüche 1 bis 11, **dadurch gekennzeichnet, dass** der Wasserbehälter (14) über der Filtereinheit (22) angeordnet ist.

14. Vorrichtung gemäß einem der Ansprüche 1 bis 13, **dadurch gekennzeichnet, dass** die Filtereinheit (22) an einem vertikal verlaufenden Profilrohr (23) befestigt ist.

15. Vorrichtung gemäß einem der Ansprüche 1 bis 14, **dadurch gekennzeichnet, dass** bei abgenommenem Wasserbehälter (14) ein weiteres elektrisch betriebenes schnurloses Küchengerät auf der Grundplatte (11) angeordnet werden kann.

16. Vorrichtung gemäß Anspruch 15, **dadurch gekennzeichnet, dass** das weitere Küchengerät ein schnurloser Toaster oder ein schnurloser Eierkocher ist.

## Claims

1. A device for preparing hot beverages having a water container (14) which is arranged on a first base plate (11), can be removed from the base plate and has a first heating device (37) for heating the water contained in the water container, having a filter unit (22) which receives ground coffee or tea leaves, having means (25, 35) for transferring water originating from the water container (14) into the filter unit (22), the means (25, 35) for transferring the water having a second heating device (36) for heating the water to be transferred, and having a receiving vessel (21) arranged downstream of the filter unit (22),
**characterized**
**in that** the water container (14) can optionally be positioned in a first position, in which the water container (14) is used as a reservoir container for the water to be transferred into the filter unit (22), or in a second position, in which the water container (14) is used as a kettle.

2. The device as claimed in claim 1, **characterized in that** in the first position the water container (14) is offset at an angle in relation to the second position.

3. The device as claimed in claim 2, **characterized in that** in the second position the water container (14) is turned substantially through 90° with respect to the first position.

4. The device as claimed in one of claims 1 to 3, **characterized in that** in the bottom region (16) the water container (14) has an outlet opening (28) which can be closed by a self-closing valve device (30).

5. The device as claimed in claim 4, **characterized in that** the means (25, 35) for transferring the water issue into an inlet nozzle (25) which is arranged on the upper side (19) of the first base plate (11) and opens the valve device (30) when the water container (14) is arranged in the first position.

6. The device as claimed in claim 5, **characterized in that** the means (25, 35) for transferring the water comprise a nonreturn valve (38) which is connected downstream of the inlet nozzle (35).

7. The device as claimed in one of claims 1 to 5, **characterized in that** the first base plate (12) comprises electrical supply means (39) which are in electrical contact with the first heating device (37) by means of detachable contact-making means (17) in the second position of the water container (14).

8. The device as claimed in claim 7, **characterized in that** the detachable contact-making means (17) comprise a 360° connector which is arranged on the upper side of the first base plate (11) and interacts with the complementary socket which is arranged on the lower side of the water container.

9. The device as claimed in either of claims 7 and 8, **characterized in that** the electrical contact is interrupted in the first position of the water container (14).

10. The device as claimed in one of claims 2-8 and claim 9, **characterized in that** the upper side (19) of the first base plate (11) and the lower side (16) of the water container (14) are profiled such that the electrical contact is interrupted when the water container (14) is turned from the second position into the first position.

11. The device as claimed in one of claims 1 to 10, **characterized in that** a second base plate (12) is provided for the receiving container (21).

12. The device as claimed in claim 11, **characterized in that** the first and second base plates (11, 12) are connected to one another to form a common base (13).

13. The device as claimed in one of claims 1 to 11, **characterized in that** the water container (14) is arranged above the filter unit (22).

14. The device as claimed in one of claims 1 to 13, **characterized in that** the filter unit (22) is fixed to a profiled pipe (23) which runs vertically.

15. The device as claimed in one of claims 1 to 14, **characterized in that** a further electrically operated cordless kitchen appliance may be arranged on the base plate (11) if the water container (14) is removed.

16. The device as claimed in claim 15, **characterized in that** the further kitchen appliance is a cordless toaster or a cordless egg boiler.

## Revendications

1. Système de préparation de boissons chaudes, comprenant un réservoir d'eau (14) disposé sur un premier support (11) et pouvant être ôté de ce support, réservoir qui comporte un premier dispositif de chauffage (37) pour réchauffer l'eau qui s'y trouve, une unité de filtration (22) recevant de la poudre à café ou du thé, des moyens (25, 35) pour transférer de l'eau provenant du réservoir d'eau (14) dans l'unité de filtration (22), moyens qui comportent un deuxième dispositif de chauffage (36) en vue de réchauffer l'eau à transférer, un récipient de récupération (21) disposé en-dessous de l'unité de filtration (22),
**caractérisé en ce que**
le réservoir d'eau (14) peut au choix être placé dans une première position, dans laquelle il sert de réservoir de stockage pour l'eau à transférer dans l'unité de filtration (22), ou dans une seconde position où il sert de bouilloire d'eau.

2. Système selon la revendication 1, **caractérisé en ce que**, dans la première position, le réservoir d'eau est décalé en angle par rapport à la seconde position.

3. Système selon la revendication 2, **caractérisé en ce que**, dans la seconde position, le réservoir d'eau (14) est essentiellement décalé de 90° par rapport à la première position.

4. Système selon l'une des revendications 1 à 3, **caractérisé en ce que** le réservoir d'eau (14) comporte, dans la zone de fond (16), une ouverture d'échappement (28) pouvant être fermée par un dispositif de soupape (30) à fermeture automatique.

5. Système selon la revendication 4, **caractérisé en ce que** les moyens (25, 35) pour transférer l'eau aboutissent dans une tubulure d'admission (25) disposée sur le côté supérieur (19) du premier support (11), tubulure qui ouvre le dispositif de soupape (30) lorsque le réservoir d'eau (14) est disposé dans la première position.

6. Système selon la revendication 5, **caractérisé en ce que** les moyens (25, 35) pour transférer l'eau comprennent une soupape de retenue (38) montée en aval de la tubulure d'admission (35).

7. Système selon l'une des revendications 1 à 5, **caractérisé en ce que** le premier support (12) comprend des moyens d'alimentation électriques (39) qui, dans la seconde position du réservoir d'eau (14) se trouvent en contact électrique avec le premier dispositif de chauffage (37), par l'intermédiaire de moyens de contact amovibles (17).

8. Système selon la revendication 7, **caractérisé en ce que** les moyens de contact amovibles (17) comprennent une fiche mâle de 360° disposée sur le côté supérieur du premier support (11), fiche qui coopère avec une prise femelle complémentaire disposée sur le côté inférieur du réservoir d'eau.

9. Système selon l'une des revendications 7 ou 8, **caractérisé en ce que** le contact électrique est interrompu dans la première position du réservoir d'eau (14).

10. Système selon l'une des revendications 2 à 8 et la revendication 9, **caractérisé en ce que** le côté supérieur (19) du premier support (11) et le coté inférieur (16) du réservoir d'eau (14) sont profilés de telle façon que le contact électrique est interrompu lors de la rotation du réservoir d'eau (14) le faisant passer de la seconde à la première position.

11. Système selon l'une des revendications 1 à 10, **caractérisé en ce qu'**un second support (12) est prévu pour le réservoir de récupération (21).

12. Système selon la revendication 11, **caractérisé en ce que** les premier et second supports (11, 12) sont reliés l'un à l'autre, de manière à former un support commun (13).

13. Système selon l'une des revendications 1 à 11, **caractérisé en ce que** le réservoir d'eau (14) est disposé au-dessus de l'unité de filtration (22).

14. Système selon l'une des revendications 1 à 13, **caractérisé en ce que** l'unité de filtration (22) est fixée à l'aide d'un tube profilé (23) s'étendant verticalement.

15. Système selon l'une des revendications 1 à 14, **caractérisé en ce que**, lorsque le réservoir d'eau (14) est enlevé, un autre ustensile de cuisine sans fil, actionné électriquement, peut être disposé sur le support (11).

16. Système selon la revendication 15, **caractérisé en ce que** l'autre ustensile de cuisine est un grille-pain sans fil ou un cuit-oeufs sans fil.
